(19) **Europäisches Patentamt**
**European Patent Office**
**Office européen des brevets**

(11) **EP 0 819 638 A2**

(12) **EUROPÄISCHE PATENTANMELDUNG**

(43) Veröffentlichungstag:
21.01.1998 Patentblatt 1998/04

(51) Int. Cl.$^6$: **B65H 18/26**, B65H 18/14

(21) Anmeldenummer: 97110173.8

(22) Anmeldetag: 21.06.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 19.07.1996 DE 19629205

(71) Anmelder:
Voith Sulzer Papiermaschinen GmbH
89509 Heidenheim (DE)

(72) Erfinder:
• Beisswanger, Rudolf
89555 Steinheim (DE)
• Madrzak, Zygmunt
89522 Heidenheim (DE)
• Riedel, Uwe, Dr.
89522 Heidenheim (DE)

(54) **Verfahren und Vorrichtung zum Aufwickeln einer Papierbahn zu einer Rolle mit aktiver Schwingungsdämpfung**

(57)   Die Erfindung betrifft einen Schwingungsunter-drückresonator zur Unterdrückung von Schwingungen einer großen schwingenden Masse, mit einer Stützein-richtung, die mit der großen schwingenden Masse ver-bunden ist;
einer vorbestimmten Schwingungsunterdrückmasse, die beweglich auf der Stützeinrichtung angeordnet ist.

Die Erfindung ist dadurch gekennzeichnet, daß der Resonator des weiteren umfaßt:

mit Gas oder Flüssigkeit befüllbare Zylinder, die fest mit der Stützeinrichtung verbunden sind; wobei
die Kolben der Zylinder mit der auf der Stützeinrichtung beweglichen Masse über Kolbenstangen verbunden sind, so daß bei Auslenkung der Masse aus einer Gleichgewichtslage eine im wesentlichen harmonische Schwingung mit einer Frequenz erfolgt, die durch den im Zylinder herrschenden Druck bestimmt wird.

FIG. 7

**Beschreibung**

Die Erfindung betrifft einen Schwingungsunterdrükkoszillator gemäß dem Oberbegriff von Anspruch 1 und eine Vorrichtung zum Aufwickeln einer laufenden Papierbahn zu einer Rolle gemäß dem Oberbegriff des Anspruches 3 bzw. 20.

Wickelmaschinen zum Aufwickeln von Papierbahnen können am Ende einer Papiermaschine angeordnet sein, um die dort anfallende Papierbahn in Rollenform zu bringen (sogenannter Pope-Roller). Sie werden aber auch dazu benutzt, um eine fertige Rolle umzurollen, um Rollen einer ganz bestimmten Wickelqualität herzustellen.

In jedem Falle soll der Wickel ganz bestimmte Eigenschaften aufweisen, insbesondere was die Wickelhärte betrifft. Die Wickelhärte soll meistens von einem gewissen Anfangswert auf einen Endwert abfallen, wobei ganz am Anfang eine harte Kernwicklung besonders wichtig ist. Der Abfall soll von der ersten bis zur letzten Lage möglichst gleichmäßig sein. Er soll einen bestimmten Gradienten aufweisen, d.h. nicht zu stark und nicht zu schwach sein. Der Verlauf der Wickelhärte soll auf gar keinen Fall Sprungstellen aufweisen, z.B. einen plötzlichen Abfall. Im Wickel dürfen keine die Papierbahn beeinträchtigenden oder zerstörenden Radial- oder Tangentialspannungen auftreten.

All dies wurde bisher angestrebt, jedoch nicht erreicht. Wickelmaschinen bekannter Bauart erzeugen statt dessen z.B. Wickel, bei denen der Kern entweder extrem weich oder extrem hart ist, und bei denen gegen Ende - etwa bei vier Fünftel des Wickeldurchmessers - ein starker Abfall der Wickelhärte eintritt. Dies hat zur Folge, daß der erste Teil, also der extrem weiche oder harte Kern, unbrauchbar ist, weil nämlich die Bahn in diesem Bereich gestaucht wird und platzt, so daß dieser Teil als Ausschuß weggeworfen werden muß; im Endbereich, in dem der Wickel nicht genügend hart gewikkelt ist, kommt es zu einem seitlichen Verschieben der Lagen relativ zueinander, so daß die Stirnseiten der fertigen Rolle ausgefranst erscheinen und die Bahnränder leicht beschädigt werden können.

Ein schlecht aufgebauter Kern (zu geringe oder zu große Härte) erlaubt nämlich keinen einwandfreien Aufbau des übrigen Wickels. Das Problem ist besonders gravierend bei druckempfindlichen Papieren, z.B. selbstdurchschreibenden (SD-)Papieren, wobei dem Anpressen des Tambours mit dem hierauf befindlichen, entstehenden Wickel gegen die Mantelfläche der Tragtrommel enge Grenzen gesetzt sind.

Bei dem aus der DE 40 07 329 bekannten Verfahren wird die entstehende Papierrolle in horizontaler Richtung entsprechend dem Rollenwachstum verschoben. Die Papierrolle erreicht ein gewaltiges Gewicht, das hundert Tonnen übersteigen kann. Deswegen kann die Papierrolle bei ihrem Anwachsen nicht feinfühlig gegen die Anpreßtrommel angedrückt werden.

DE 44 15 324 zeigt und beschreibt eine Wickelmaschine zum Aufwickeln einer Papierbahn auf einen Tambour mit Zentralantrieb. Diese Maschine umfaßt eine Wickelstation, eine Aufnahmestation und eine antriebslose Andrückwalze. Die Andrückwalze liegt am Umfang des Sekundärwickels kontinuierlich bis in die Wickelstation an. Die Bahn ist derart geführt, daß sie ständig umschlingungsfrei in den Einlaufspalt eintritt. Betreibt man eine derartige Wickelvorrichtung bei hohen Bahngeschwindigkeiten, vorzugsweise mehr als 1000 m/min, so treten unerwartet und plötzlich Schwingungen der Anpreßrolle auf, die im Rezonanzfall zu Schädigungen der Wickelvorrichtung führen können. Um diese nicht auftreten zu lassen, hat man den Durchmesser der Andrückwalze möglichst klein gewählt, vorwiegend gleich groß wie derjenige einer normalen Bahnleitwalze. Das hatte den Nachteil, daß die Andrückwalze mangels ausreichender Biegesteifigkeit nicht zum Aufbringen beliebig hoher Linienkräfte geeignet, insbesondere nicht für extrem große Bahnbreiten (bis ca. 10 m).

Aus der US-A-5 431 261 ist eine geregelte Schwingungsunterdrückvorrichtung bekanntgeworden. Nachteilig an dieser Schwingungsunterdrückvorrichtung war, daß keine großen Massen im Bereich einiger Tonnen, wie die zuvor beschriebene Anpreßtrommel- bzw. Druckwalzenvorrichtung gedämpft werden konnten, da als aktive bzw. angeregte Resonatoren immer solche benutzt wurden, die magneto- bzw. elektrorestriktiv auf unterschiedliche Frequenzen abgestimmt wurden.

Eine erste Aufgabe der Erfindung ist es somit, Resonatoren anzugeben, die als Schwingungsunterdrückvorrichtungen für Schwingungen großer Massen verwendet werden können.

Eine zweite Aufgabe der Erfindung ist es, eine Wickelvorrichtung anzugeben, bei der die Nachteile der aus dem Stand der Technik bekannten Vorrichtungen vermieden werden und insbesondere bei Wickelvorrichtungen gemäß dem Oberbegriff von Anspruch 1, wie aus der DE 44 15 324 bekannt, Schwingungen der Anpreßtrommel- bzw. Druckwalzenvorrichtung, die eine Anpreßtrommel bzw. Druckwalze umfaßt, unterdrückt werden.

Erfindungsgemäß wird die erste Aufgabe durch Anspruch 1 und die zweite Aufgabe durch die Vorrichtung gemäß Anspruch 3 und das Verfahren gemäß Anspruch 20 gelöst.

Anstelle von magneto- bzw. elektrorestriktiven Elementen schlägt die Erfindung zur Lösung der ersten Aufgabe vor, Hydraulikzylinder bzw. mit Gas befüllte Zylinder zu verwenden, deren Steifigkeit $K_A$ als Funktion des im Zylinder herrschenden Druckes, gegen den der Kolben bewegt werden muß, eingestellt wird. Vorteilhafterweise ist für eine derartige Vorrichtung vorgesehen, die vorherbestimmte, bewegliche, d.h. eine Schwingungsbewegung ausführende Masse, zwischen zwei Zylindern anzuordnen und mit Kolben derselben Starre zu verbinden. Neben der Möglichkeit, die Steifigkeit $K_A$ in einem solchen System durch Druckänderung einzustellen, ist es auch möglich, bei Verbindung der beiden Zylinder über eine Leitung mit einer Drossel ein Dämpfungsglied einzubringen, womit der Bewegung der Zylinder ein gewisses Frequenzspektrum bzw. Frequenzband zugeordnet werden kann.

Wesentliche Ursache für das Auftreten der Schwingungen der Anpreßtrommel- bzw. Druckwalzenvorrichtung, die die Anpreßtrommel bzw. Druckwalzen, die nachfolgend auch als Sensomatwalzen bezeichnet werden, aufnehmen und Teil der feinfühligen Wickelvorrichtung sind, sind nach den Erkenntnissen der Erfinder Abweichungen der aufgewickelten Papierrolle von der idealen kreisrunden Kontur. Wie die Erfinder festgestellt haben, weist eine Papierrolle immer Unrundheiten, beispielsweise Druckstellen auf, die die Sensomatwalzen und die damit verbundene Tragvorrichtung, zu Schwingungen anregen können. Dies ist darauf zurückzuführen, daß die Sensomatwalze bei der Wickelvorrichtung gemäß Anspruch 3 nicht wie in anderen Einrichtungen gemäß dem Stand der Technik durch eine unendlich große Masse, beispielsweise ein Fundament, abgestützt wird, sondern auf einer relativ zur Papierrolle beweglichen Einrichtung angebracht ist, um mit dem Anwachsen des Wickeldurchmessers sich von dem Zentrum des Wickels wegzubewegen.

Die Erfindung schlägt daher zur Lösung der zweiten Aufgabe vor, bei einem System mit einer relativ zum Tambour bzw. Papierrolle bewegbaren Anpreßtrommel- bzw. Druckwalzenvorrichtung eine Schwingungsunterdrückvorrichtung vorzusehen, mit der diese auftretenden Schwingungen unterdrückt werden können.

In einer ersten Ausführungsform schlägt die Erfindung vor, daß die Schwingungsunterdrückvorrichtung eine Stützeinrichtung umfaßt, die lediglich mit der Anpreßtrommel- bzw. Druckwalzenvorrichtung fest verbunden ist. Weitere Abstützungen, beispielsweise an der Wand oder an einem Fundament sind bei einer derartigen Schwingungsunterdrückvorrichtung nicht vorgesehen.

Als Beispiel für eine derartige Schwingungsunterdrückvorrichtung schlägt die Erfindung vor, auf der Stützreinrichtung, die beispielsweise als Schiene ausgebildet sein kann, die am Lager der Anpreßtrommel- bzw. Druckwalzenvorrichtung befestigt ist, eine Masse vorzusehen, die sich auf der Stützeinrichtung relativ zur Anpreßtrommel- bzw. Druckwalzenvorrichtung bewegen kann, beispielsweise dadurch, daß sie entlang der Bahn geführt gleitet bzw. auf einer Schiene rollt. Die Bewegung der Masse ist die eines harmonischen Oszillators, d.h. bei Auslenkung der Masse aus der Ruhelage erfährt diese im Idealfall eine zur Auslenkung linear ansteigende Gegenkraft, so daß sich eine oszillierende Bewegung, also eine Schwingung der Masse ergibt, wenn diese hierzu angeregt wird.

Dies kann durch Selbstanregung, beispielsweise bei Auftreten einer Schwingung der Sensomatwalze bzw. der Anpreßtrommelvorrichtung geschehen oder in einer Fortbildung der Erfindung mit Hilfe von Mitteln zur Anregung der Schwingung, wobei eine spezielle Ausführungsform darin besteht, daß die Mittel zum Anregen der Schwingung mindestens einen Aktuator, beispielsweise einen Hydraulik- oder mit Gas, beispielsweise Luft befüllten Zylinder umfaßt.

In einer weitergebildeten Ausführungsform kann vorgesehen sein, daß die Mittel zur Anregung der phasenversetzten Schwingung einen Bewegungssensor umfassen, der an der Anpreßtrommel- bzw. Druckwalzenvorrichtung angeordnet ist. Durch die Aufnahme der Bewegung der Anpreßtrommel- bzw. Druckwalzenvorrichtung kann auf die Schwingungsfrequenz derselben zurückgeschlossen werden. Auf diese Art und Weise ist es möglich, in einer fortgebildeten Ausführungsform die aktuelle Schwingungsfrequenz bzw. das Schwingungsfrequenzband der Anpreßtrommel- bzw. Druckwalzenvorrichtung zu ermitteln.

Diese Signale können in einer besonders vorteilhaften Ausführungsform dafür verwendet werden, Mittel zum Einstellen der Frequenz, mit der die Masse der Schwingungsunterdrückvorrichtung schwingt, anzusteuern. Die erwünschte Abstimmbarkeit bzw. Veränderbarkeit der Frequenz ermöglicht ein Schwingungsunterdrückoszillator, der mindestens zwei Zylinder, die mit Hydraulikflüssigkeit oder einem Gas befüllt sein können, umfaßt.

In einer Fortbildung der Erfindung ist vorgesehen, daß die Schwingungsunterdrückungsvorrichtung eine Steuer- bzw. Regeleinrichtung umfaßt, mit der in Abhängigkeit von dem vom Bewegungssensor aufgenommenen Meßsignal die Mittel zum Einstellen der Schwingungsfrequenz so angesteuert werden, daß die Schwingungsfrequenz bzw. Schwingungsfrequenzen der Masse immer der Schwingungsfrequenz bzw. Schwingungsfrequenzen der Anpreßtrommelvorrichtung entspricht. Dies kann beispielsweise dadurch geschehen, daß die Drücke in den zuvor genannten Zylindern so eingestellt werden, daß eine bestimmte Steifheit der Zylinder erreicht wird, womit die "Federkonstante" des Oszillators aus Masse und Zylinder eingestellt wird. Dies erlaubt somit eine Änderung der Schwingungsfrequenz des Oszillators.

Die Steuerung kann zu einer Regelung erweitert werden, wenn auch an der Masse des Oszillators zur Schwingungsunterdrückung ein Bewegungssensor vorgesehen ist, so daß aus dem Bewegungssignal der Anpreßtrommelvorrichtung und Schwingungsunterdrückvorrichtung die Phasenlage der Schwingungen zueinander bestimmt werden kann. Die durch den Aktuator angeregte Schwingung wird mittels der Regelung derart phasenversetzt zur ersten erregt, daß eine weitgehend vollständige Auslöschung der unerwünschten Schwingung der Anpreßtrommel- bzw. Druckwalzenvorrichtung erfolgt, auch wenn sich die unerwünschte Schwingung der Anpreßtrommelvorrichtung zeitlich ändert.

In einem völlig anderen Konzept der Schwingungsunterdrückung ist vorgesehen, daß die Stützeinrichtung nicht nur mit der Anpreßtrommel- bzw. Druckwalzenvorrichtung fest verbunden ist, sondern des weiteren eine feste Abstützung beispielsweise an der Wand oder der Trageinrichtung für die Anpreßtrommel selbst, die relativ zum Tambour bewegbar ist, aufweist.

In einer ersten Ausführungsform dieses zweiten Konzeptes ist vorgesehen, daß die Schwingungsunterdrückvorrichtung einen Hydraulikzylinder umfaßt, wobei die an den Hydraulikzylinder angeschlossenen Hydraulikleitungen eine Drossel aufweisen. Weist die Bahn eine Unebenheit auf, so wird der Kolben des Zylinders der Schwingungsdämpfungsvorrichtung ausgelenkt. Hierdurch wird beispielsweise Hydrauliköl aus dem Zylinder verdrängt. Da die Drossel einen sofortigen Abfluß des Hydrauliköles aus dem Zylinder verhindert, bzw. diesem einen Widerstand entgegensetzt, wird die Steifigkeit erhöht und damit, je nach Stärke der Auslenkung, durch die Unebenheit auf die Sensomatwalze eine Gegenkraft ausgeübt, die dazu führt, daß eine Schwingung derselben vermieden wird.

Neben der Vorrichtung stellt die Erfindung auch ein Verfahren gemäß Anspruch 20 zur Verfügung, bei dem die Schwingungen, insbesondere Resonanzschwingungen der Anpreßtrommel- bzw. Druckwalzenvorrichtung gegen die Warenbahnrolle unterdrückt wird.

In einer Fortbildung ist vorgesehen, daß als zusätzlicher Verfahrensschritt die Bewegung der Anpreßtrommel- bzw. Druckwalzenvorrichtung von einem Bewegungssensor aufgenommen wird und aufgrund dieses Bewegungssignales die Schwingungsfrequenz bzw. das Schwingungsfrequenzband der Bewegung bestimmt wird.

In einer Fortbildung kann dann vorgesehen sein, daß in Abhängigkeit von dem aufgenommenen Frequenzsignal bzw. Frequenzband der Bewegung der Anpreßtrommel- bzw. Druckwalzenvorrichtung die Steifigkeit der Schwingungsunterdrückvorrichtung derart eingestellt wird, daß die Schwingungsfrequenzen der Schwingungsunterdrückvorrichtung bzw. das Schwingungsband mit demjenigen der Anpreßtrommel- bzw. Druckwalzenvorrichtung übereinstimmt. Auf diese Art und Weise wird durch gegenphasiges Schwingen des angeregten Oszillators die unerwünschte Schwingung der Anpreßtrommelvorrichtung unterdrückt.

Um die Phasenlage der Kompensationsschwingung einstellen zu können, ist eine Fortbildung des Verfahrens vorgesehen, die Bewegung der Schwingungsunterdrückoszillatormasse aufzunehmen und aus den Bewegungssignalen der Anpreßtrommel- bzw. Druckwalzenvorrichtung und der Oszillatormasse die Phasenlage zu bestimmen und die Oszillatormasse entsprechend anzusteuern, um sie phasenversetzt auszulenken.

Im nachfolgenden soll die Erfindung anhand der Figuren beispielhaft beschrieben werden.

Es zeigen:

Fig. 1    eine schematische Darstellung einer Schwingungsunterdrückungsvorrichtung mit einer vorbestimmten Masse;

Fig. 2    eine schematische Darstellung wie in Fig. 1, wobei jedoch an der Kompensationsmasse und der schwingenden Masse Bewegungssensoren angeordnet sind;

Fig. 3    eine alternative Ausführungsform einer Schwingungsunterdrückvorrichtung, die fest abgestützt ist;

Fig. 4    eine Wickelvorrichtung ohne Schwingungsunterdrückvorrichtung;

Fig. 5    eine erste Ausführungsform einer Wickelvorrichtung mit einer Schwingungsunterdrückvorrichtung, wobei die Sensomatwalze drehbar gelagert ist;

Fig. 6    eine zweite Ausführungsform einer Wickelvorrichtung mit einer Schwingungsunterdrückvorrichtung, wobei die Sensomatwalze im wesentlichen axial verschiebbar ist;

Fig. 7    eine Wickelvorrichtung mit einer Schwingungsunterdrückvorrichtung, die einen Bewegungssensor zur Aufnahme der Bewegung der Anpreßwalze aufweist;

Fig. 8    eine Wickelvorrichtung wie in Fig. 7, die darüber hinaus einen weiteren Sensor zur Aufnahme der Bewegung des Schwingungsunterdrückoszillators aufweist;

Fig. 9    eine alternative Ausführungsform einer Schwingungsunterdrückvorrichtung, wobei die Schwingungsunterdrückvorrichtung fest auf der die Sensomatwalze tragenden Einrichtung abgestützt ist;

Fig. 10   eine detaillierte Darstellung der Schwingungsunterdrückvorrichtung gemäß Fig. 9;

Fig.11    eine zweite Ausführungsform einer Schwingungsunterdrückvorrichtung, die fest abgestützt ist.

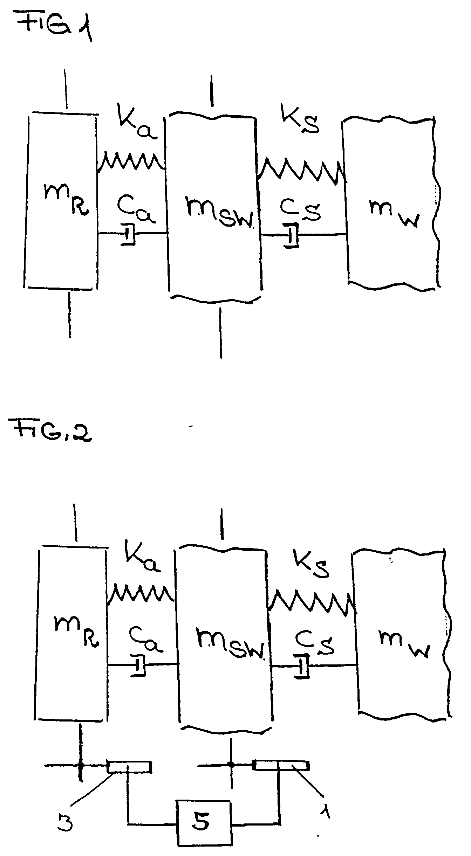

In Fig. 1 ist schematisch eine Ausführungsform der erfindungsgemäßen Anordnung einer Wickelvorrichtung mit einer Schwingungsunterdrückvorrichtung, wobei sich die Schwingungsunterdrückvorrichtung nicht abstützt, dargestellt.

Wie in Fig. 1 dargestellt, kann das System in vereinfachter Weise dadurch beschrieben werden, daß der Wickelrolle eine Masse $M_W$ zugeordnet wird. Die Anpreßtrommelvorrichtung umfassend die Sensomatwalze weist eine Masse $M_{SW}$ auf. Kommt es nun, aus welchen Gründen auch immer, zu einer Schwingung der Sensomat- bzw. Anpreßtrommel- bzw. Druckwalzenvorrichtung, die durch den Wickel angeregt wird, so kann man eine derartige Schwingung durch das Modell eines oder mehrerer harmonischer Oszillatoren mit einer oder mehreren Schwingungsfrequenzen bzw. einem Schwingungsfrequenzband beschreiben. Modellhaft bedeutet dies, daß die Sensomatwalze eine gewisse Steifigkeit $K_S$ und eine gewisse Dämpfung $C_S$ gegenüber der Wickelrolle aufweist. Diese Konstanten bestimmen die Schwingungsfrequenz des harmonischen Oszillators. Wenn die Masse der Wickelrolle sehr viel größer als die Masse der Sensomatwalze ist, gilt in einer ersten Näherung für die Frequenz, mit der die Sensomatwalze schwingt, $\omega_s \approx \sqrt{K_S/M_{SW}}$. Vorzugsweise liegen die Schwingungsfrequenzen der Anpreßtrommelvorrichtung zwischen 10 und 50 Hz. Betreffend die theoretische Beschreibung von Schwingungen, siehe beispielsweise "Dubbel, Taschenbuch für den Maschinenbau, 18. Auflage, Seiten B37 - B44, 1996, Springer-Verlag Berlin".

Als Schwingungsdämpfungsvorrichtung ist eine vornestimmte Masse $M_R$ vorgesehen, die frei gegen die Masse $M_{SW}$ schwingt, wobei dieses System wiederum eine gewisse Steifigkeit $K_A$ und eine gewisse Dämpfung $C_A$ aufweist und für die Frequenz dieses Systemes in einer ersten Näherung wiederum gilt $\omega_0 \approx \sqrt{K_0/M_R}$.

Wird nun die Masse $M_{SW}$ zu einer Schwingung erregt, so kann diese unerwünschte Schwingung dadurch unterdrückt werden, daß die vorbestimmte Masse $M_R$ mit gleicher Frequenz ebenfalls zu einer Schwingung angeregt wird, die bei entsprechendem Phasenversatz die Schwingung der Masse $M_{SW}$ kompensiert, d.h. es gilt $\omega_s \approx \omega_0$. Zur Einstellung der Schwingungsfrequenz dient im wesentlichen die Variation der Steifigkeit $K_A$ des Schwingungsunterdrückoszillators.

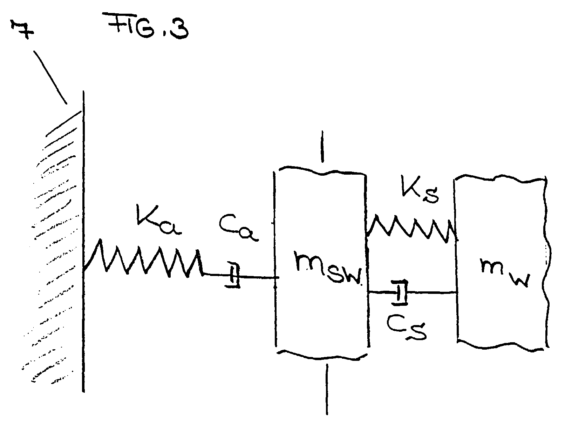

Fig. 2 ist die Darstellung derselben Anordnung wie Fig. 1, jedoch weisen die Anpreßtrommelvorrichtung mit der Masse $M_{SW}$ sowie die vorbestimmte Masse der Schwingungsunterdrückvorrichtung Bewegungssensoren 1 bzw. 3 auf, die Bewegungssignale der Masse aufnehmen, woraus die Frequenz und die Phasenlage der Schwingungen zueinander bestimmt werden kann. Mit Hilfe der Steuer-/Reglervorrichtung 5 ist es dann möglich, den Oszillator der Schwingungsunterdrückvorrichtung mit der Masse $M_R$ derart anzusteuern, daß dieser sowohl in Frequenz wie auch Phasenlage genau derart schwingt, daß er die Schwingung der Sensomatwalze kompensiert.

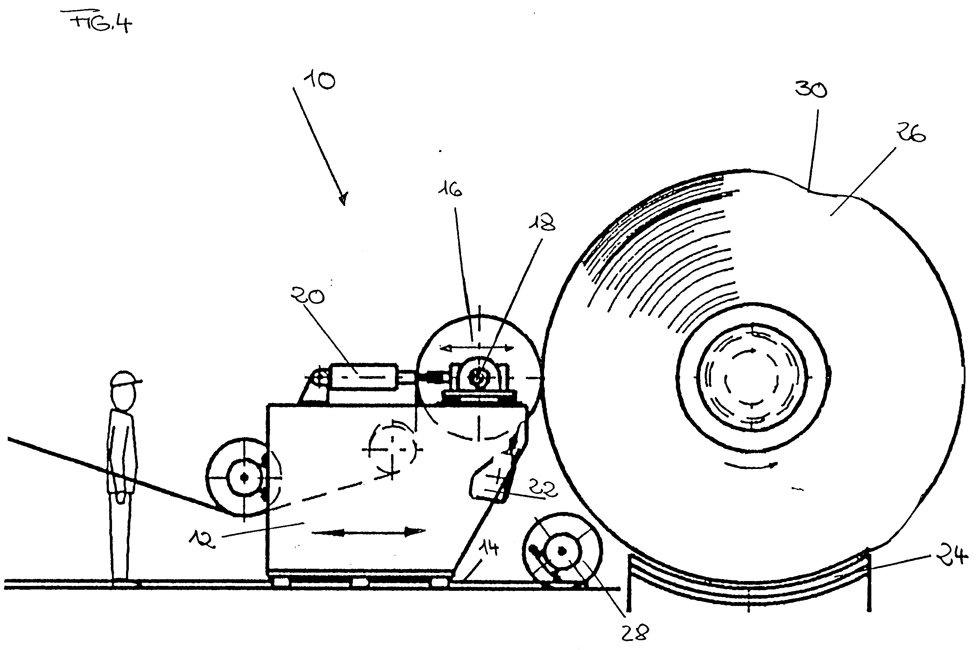

In Fig. 3 ist wiederum ein System, bestehend aus einer Masse $M_W$ der Wickelrolle und $M_{SW}$ der Anpreßtrommelvorrichtung dargestellt, die schwingungsmäßig miteinander gekoppelt sind, sowie eine Schwingungsunterdrückvorrichtung, wobei die Schwingungsunterdrückvorrichtung eine feste Abstützung 7 aufweist und die Masse der Anpreßtrommelvorrichtung oder auch nur der Sensomatwalze alleine elastisch hieran abgestützt ist. Derartige Systeme können bei Erkennung von Störeinflüssen, die von der Wickelrolle mit der Masse $M_W$ herrühren, derart angesteuert werden, daß die Schwingungsunterdrückvorrichtung umfassend eine gewisse Steifigkeit $K_A$ sowie eine gewisse Dämpfung $C_A$ aufweist, so daß Stöße auf die Masse der Sensomatwalze bzw. Anpreßtrommelvorrichtung durch eine Gegenkraft kompensiert werden, so daß eine Schwingungsanregung der Sensomatwalze bzw. Anpreßtrommelvorrichtung nicht erfolgt.

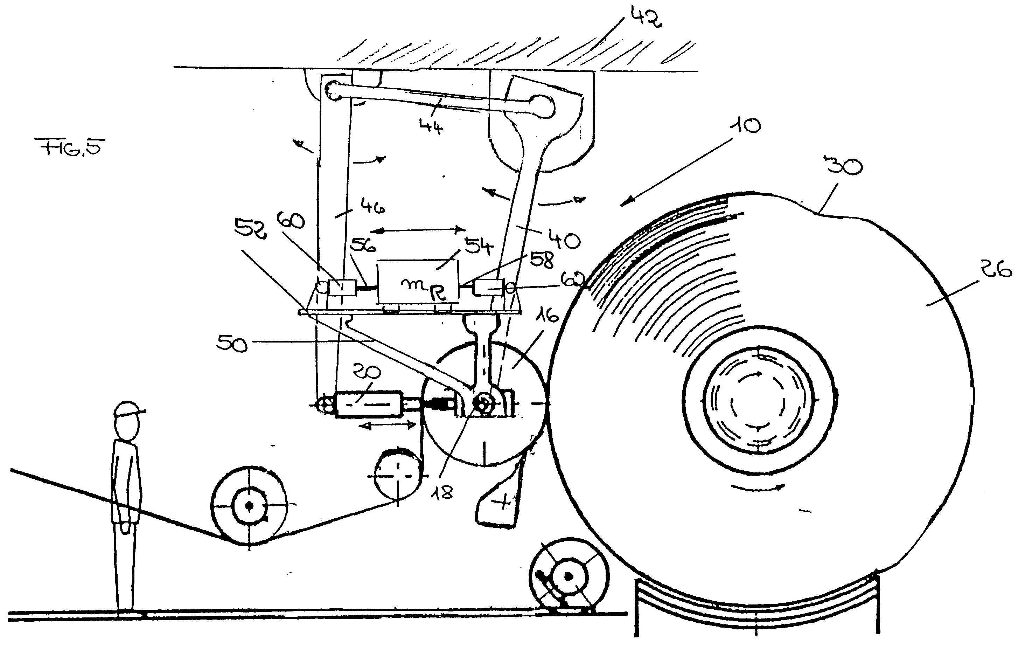

In Fig. 4 ist eine Ausführungsform einer oberbegrifflichen Wickelvorrichtung ohne die erfindungsgemäße Schwingungsunterdrückvorrichtung dargestellt.

Die Wickelvorrichtung 10 umfaßt einen Horizontalschlitten 12, der Bestandteil der Anpreßtrommel- bzw. Druckwalzenvorrichtung ist. Der Horizontalschlitten 12 ist auf einer Führungsbahn 14, wie dargestellt, in horizontaler Richtung verfahrbar. Der Horizontalschlitten 12 trägt die Anpreßtrommel bzw. Druckwalze 16. Die Anpreßtrommel 16 kann einen Antrieb aufweisen. Die Lager 18 der Anpreßtrommel 16 ("Sensomatwalze") sind mittels eines Kurzhubkraftgebers 20 ("Sensomat") auf dem Horizontalschlitten 12 ebenfalls horizontal verfahrbar. Der Horizontalschlitten 12 trägt weiterhin einen Schaber 22 zum Führen der Papierbahn (als Ausschuß) nach unten.

In horizontalem Abstand vom Horizontalschlitten 12 befindet sich eine Vorrichtung 24 zum flächigen Unterstützen der entstehenden Papierrolle 26 (Stützvorrichtung). Die Stützvorrichtung ist hier nur schematisch angedeutet. Sie kann unterschiedliche Ausführungsformen haben. So kann sie beispielsweise zwei zur Papierrolle parallele Walzen umfassen, die von einem Stützband umschlungen sind.

Im Bereich der Stützvorrichtung 24 ist eine Andrückrolle 28 vorgesehen. Diese erstreckt sich über die gesamte Breite der Papierrolle 26.

Wie in Fig. 4 dargestellt, weist die Papierrolle 26 in einer übertrieben starken Darstellung Abweichungen in ihrer Oberflächenkontur von dem idealerweise erwarteten kreisrunden Verlauf an der Stelle 30 auf. Da diese Unebenheit sich während des gesamten Wickelvorganges fortsetzt bzw. mit anwächst, wird sie in periodischen Abständen mit der Sensomatwalze 16 in Berührung gelangen und so über diese die gesamte Anpreßtrommelvorrichtung zu den unerwünschten Schwingungen anregen. Dies ist darauf zurückzuführen, daß eine Regeleinrichtung den Kurzhubzylinder zur Aufrechterhaltung einer bestimmten Linienkraft in Richtung der Eindrückstelle nachregelt. Die Sensomatwalze 16 kann durch diese Regelung zu schwingen anfangen und diese Schwingung auf den beweglich gelagerten Horizontalschlitten 12 übertragen und so zu einer Schwingung der gesamten Anpreßtrommelvorrichtung führen. Es ist zu bemerken, daß der Kurzhubzylinder 20 nur ein Ausführungsbeispiel einer Anpreßeinrichtung ist, mit der die Anpreßtrommel- bzw. Druckwalzenvorrichtung mit dem Tambour in Kontakt gebracht werden kann, um die gewünschte Linienkraft auf den Tambour bzw. die Wickelrolle aufzubringen.

Die in Fig. 4 dargestellte Stellung der Wickelvorrichtung kennzeichnet eine Arbeitsphase der Wickelvorrichtung, bei der die Papierrolle 9 nahezu fertiggewickelt ist. Der Horizontalschlitten 12 befindet sich in seiner linken Extremposition. Durch die horizontale Beweglichkeit des Anpreßschlittens 12 wandert dieser bei gleichzeitiger Aufrechterhaltung des Kontaktes von Sensomatwalze und aufgewickelter Rolle mit wachsendem Rollendurchmesser in der dargestellten Ausführungsform nach links mit.

Wie ausgeführt, liegt die Anpreßtrommel 16 an dem Umfang der Papierrolle 26 an, wohingegen die Andrückwalze 28 noch nicht in Kontakt mit der Papierrolle ist. Dies geschieht erst dann, wenn ein Rollenwechsel, der in dieser Anmeldung nicht beschrieben werden soll, vorgenommen wird.

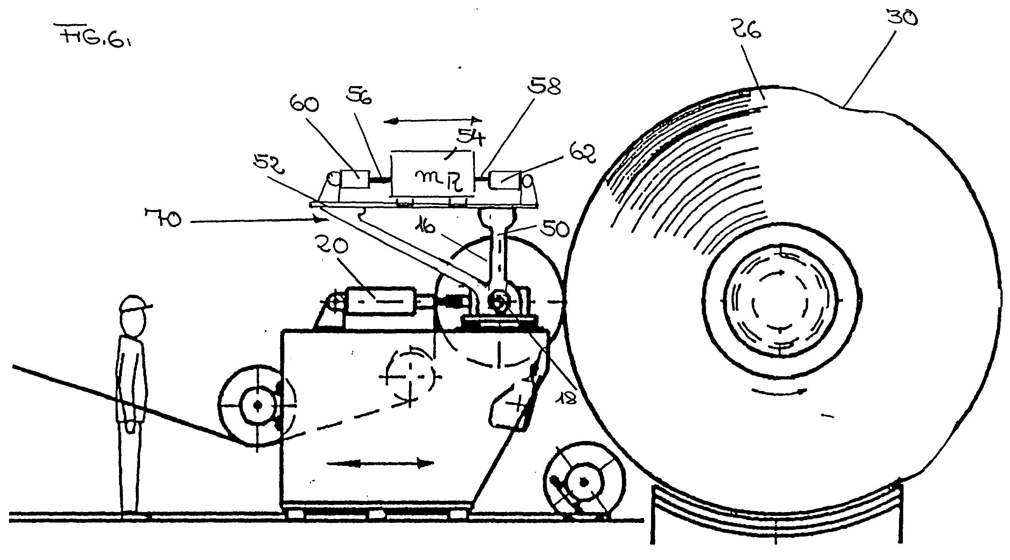

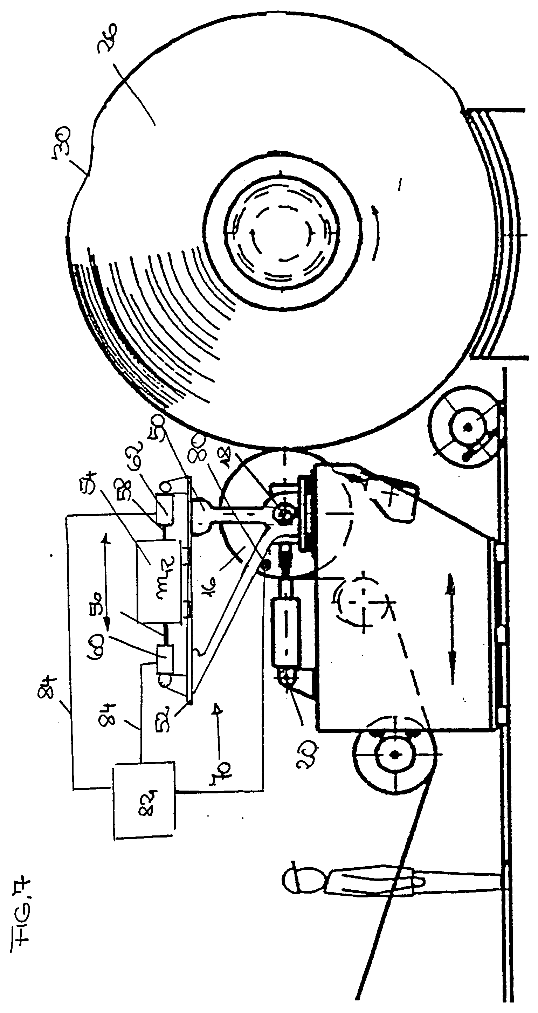

In Fig. 5 ist eine zweite mögliche Ausführungsform einer Vorrichtung gemäß Fig. 4 gezeigt, die bereits eine Schwingungsunterdrückvorrichtung umfaßt. Prinzipiell unterscheidet sich die in Fig. 5 dargestellte Wickelvorrichtung von der in Fig. 4 gezeigten dadurch, daß die Bewegbarkeit der Anpreßtrommel 16 ("Sensomatwalze") nicht über einen horizontal verfahrbaren Schlitten hergestellt wird, sondern durch eine Aufhängung der Sensomatwalze an einer Art mathematischem Pendel 40, das beispielsweise an einer Decke 42 befestigt sein kann und starr über die Verbindung 44 mit einem weiteren Pendel 46 verbunden ist, das die Anpreßvorrichtung in Form eines Kurzhubzylinders 20 trägt. Am Lager 18 der Anpreßtrommel 16 ist fest eine Stützvorrichtung 50 befestigt, die eine Führungsbahn 52 trägt, auf der eine vorbestimmte Masse $M_R$ 54 horizontal verfahrbar angeordnet ist. Die gegenüber einer Pendelbewegung der Sensomatwalze unabhängig in horizontaler Richtung auf der Führungsschiene 52 verfahrbare Kompensationsmasse 54 ist mit den Kolbenstangen 56, 58 zweier Zylinder 60, 62, die mit Gas oder einer Flüssigkeit befüllt sein können, verbunden, die fest auf der Führungsbahn verankert sind. Ist die Sensomatwalze bzw. Anpreßvorrichtung vollständig in Ruhe, so befindet sich die Kompensationsmasse ebenfalls in Ruhe, und zwar in ihrer Gleichgewichtslage, vorzugsweise in einer Mittelstellung zwischen beiden Zylindern. Die Wirkungsweise der Zylinder soll bei der in Fig. 6 dargestellten Ausführungsform der Wickelvorrichtung mit horizontal verfahrbarer Anpreßtrommel- bzw. Druckwalzenvorrichtung, die ebenfalls eine Schwingungsunterdrückvorrichtung, wie in Fig. 5 dargestellt aufweist, näher erläutert werden.

Wie bereits in Fig. 5 beschrieben, wird bei Schwingungen der Sensomatwalze 16, die zu einer Schwingung der gesamten Anpreßtrommelvorrichtung führen kann, die Masse $M_R$ 54 der Schwingungsunterdrückvorrichtung 70, die über die Stützeinrichtung 50 sich ausschließlich am Lager 18 der Sensomatwalze 16 abstützt, eine Schwingung anregt, die die Schwingung der Sensomatwalze bzw. Anpreßtrommelvorrichtung kompensiert. Hier ist darauf zu achten, daß die Schwingungsfrequenz der Anpreßtrommelvorrichtung umfassend die Sensomatwalze und den Horizontalschlitten, da ja der Kurzhubkolben 20 versucht, die Sensomatwalze in einer bestimmten Position auf dem Horizontalschlitten zu halten, der Schwingungsfrequenz, mit der die Masse $M_R$ schwingt, entspricht. Hierzu ist es notwendig, die Schwingungsfrequenz des Kompensationsoszillators, bestehend aus der Masse $M_R$ und dem Kolben 60, 62 abstimmen zu können. Dies geschieht dadurch, daß der in den Hydraulik- bzw. mit Gas befüllten Zylindern 60, 62 herrschende Druck gegen den der Kolben bei Verschiebung arbeiten muß, verändert wird. Es hat sich nämlich herausgestellt, daß für adiabatische Führung und Befüllung mit einem idealen Gas die Gegenkraft, die der Kolben bei Verschiebung aufbaut, in erster Näherung gilt:

$$F \sim f(P_Z) \cdot x,$$

wobei x die Verschiebung der Kolbenstange in horizontaler Richtung angibt. Dies aber bedeutet, daß für die Steifigkeit gilt:

$$K_A = f(P_Z),$$

also die Steifigkeit eine Funktion vom im Zylinder herrschenden Gasdruck $P_Z$ ist.

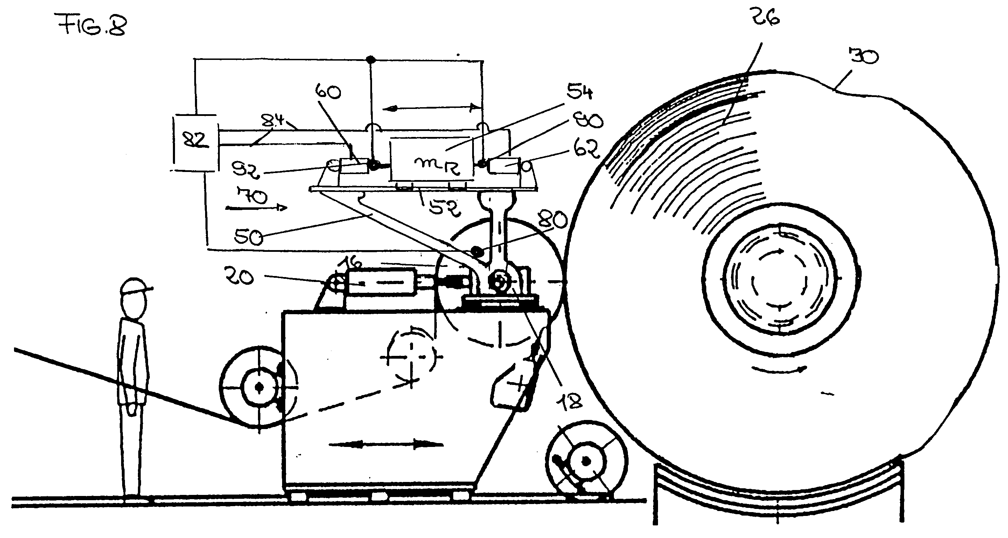

Fig. 7 zeigt eine Ausführungsform der Wickelvorrichtung mit Schwingungsunterdrückvorrichtung 70 gemäß Fig. 6, wobei die Schwingungsunterdrückvorrichtung des weiteren einen Bewegungssensor 80 umfaßt, der die Bewegung der Anpreßtrommel- bzw. Druckwalzenvorrichtung aufnimmt und das Bewegungssignal einer Steuereinheit 82 zuleitet, die aus dem Bewegungswert die Frequenz der Bewegung der Anpreßtrommel- bzw. Druckwalzenvorrichtung bestimmt. Die Steuereinrichtung 82 ändert dann die Steifigkeit des Schwingungsunterdrückoszillators mit der vorbestimmten Masse $M_R$ 54 derart, daß die Frequenz, mit der dieses System schwingt, bzw. angeregt wird, mit der Frequenz, mit der die Anpreßtrommel- bzw. Druckwalzenvorrichtung schwingt, übereinstimmt. Da die Steifigkeit bei einem mit einem idealen Gas bei den vorgegeben Umgebungsparametern gefüllter Zylinder eine Funktion des Druckes $P_Z$ im Zylinder ist, ist es beispielsweise möglich, aufgrund einer von Eichmessungen erstellten Tabelle, in der die Druckwerte der Zylinder 60 bzw. 62 mit den Steifigkeiten des Schwingungsunterdrückoszillatorsystems zugeordnet sind, $K_A$ wie gewünscht einzustellen. Es wird daher entsprechend der gewünschten Frequenz bzw. Steifigkeit über die Leitungen 84 die Zylinder 60 bzw. 62 mit einem entsprechenden Druck $P_Z$ beaufschlagt.

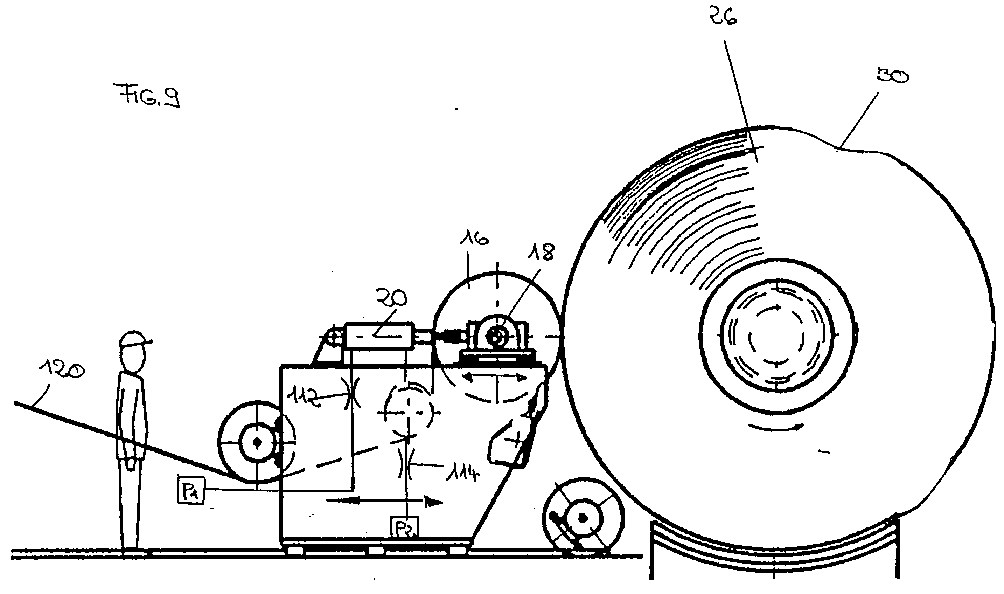

In Fig. 8 ist die Schwingungsunterdrückvorrichtung gemäß Fig. 7 derart weitergebildet, daß zusätzlich in das System noch Bewegungssensoren 90, 92 eingebracht sind, die die Bewegung des Schwingungsunterdrückoszillators aufnehmen und diese Bewegungssignale der Steuereinheit 82 zuführen, die in vorliegendem Fall als auch Reglereinheit fungieren kann. Durch die Aufnahme dieses Signales ist es nämlich möglich, auch die Phasenlage der Schwingungen zueinander zu bestimmen, was eine gezielte Betätigung des Schwingungsunterdrückoszillators ermöglicht, so daß eine aktive Schwingungsunterdrückung durchgeführt werden kann. Hierfür bedarf es spezieller Regelprogramme, wie sie beispielsweise aus der US-Patentschrift US-A-5 431 261, deren Offenbarungsgehalt in diese Anmeldung voll umfänglich miteinbezogen wird, bekanntgeworden sind. Die US-A-5 481 261 betrifft ein aktives Regelverfahren zur Dämpfung von Schwingungen einer großen Masse mittels eines Schwingungsunterdrückoszillators. Im wesentlichen wird eine variable Kraft auf die Schwingungsunterdrückvorrichtung ausgeübt, die proportional zur Verschiebung der Schwingungsunterdrückmasse ist und eine bestimmte gesteuerte bzw. kontrollierte Zeitverzögerung aufweist. Mit einem derartigen Regelalgorithmus können Schwingungen durch Regelung des Schwingungsunterdrückoszillators aktiv unterdrückt werden.

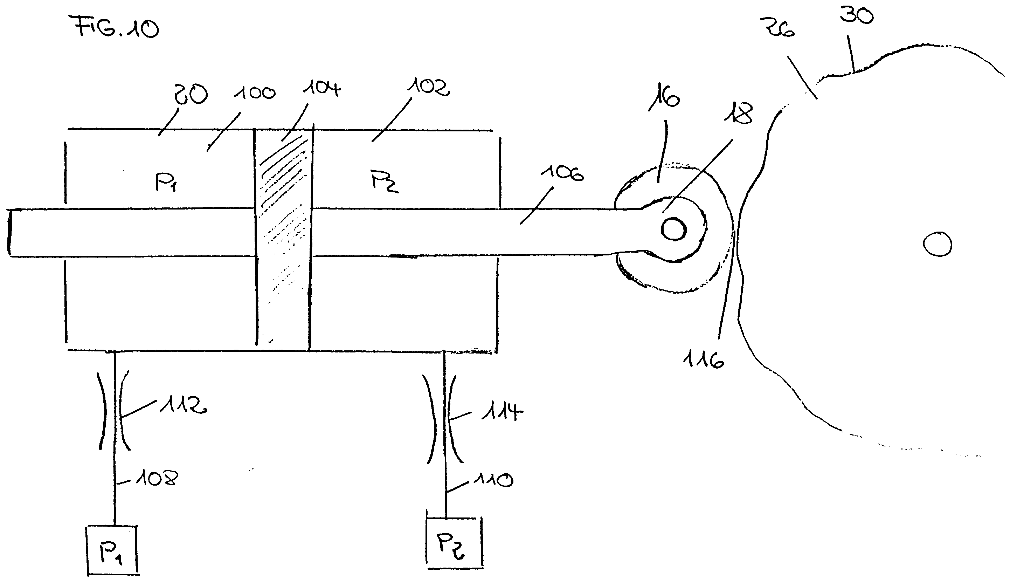

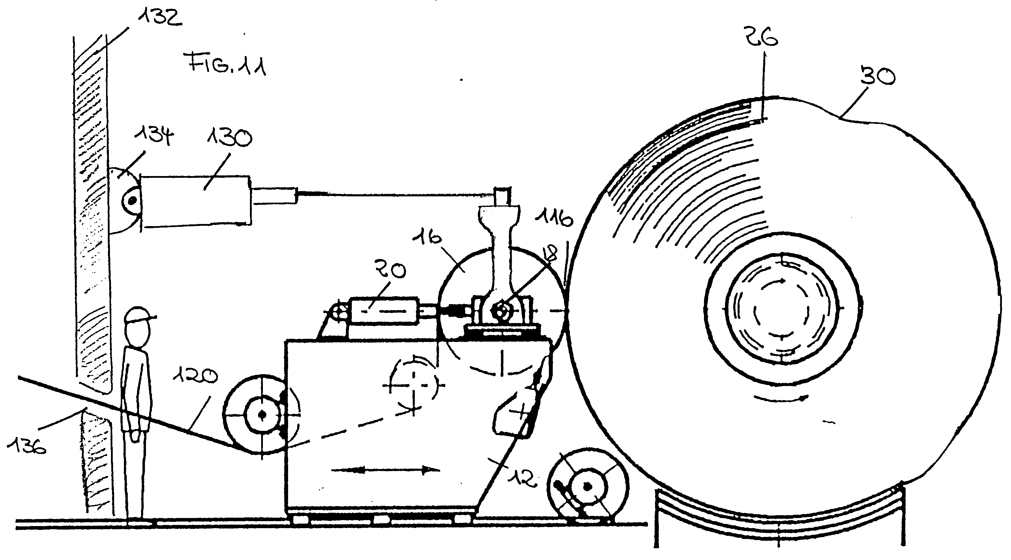

In Fig. 9 ist ein völlig anderes Konzept einer Schwingungsunterdrückung an einer Wickelvorrichtung dargestellt. Vorteilhafterweise wird hierzu gegenüber den Ausführungsformen nach Fig. 5 - 8 keine zusätzliche Stützeinrichtung 50 benötigt, da das Schwingungsunterdrücksystem nicht ausschließlich am Lager 18 der Sensomatwalze 16 befestigt ist, sondern hieran und an einer weiteren Abstützung, die fest ist. Beispielsweise kann der Kurzhubzylinder durch entsprechenden Umbau selbst dazu benutzt werden, Schwingungen der Sensomatwalze zu dämpfen. Dies ist durch den Umbau des Kurzhubzylinders, wie in Fig. 10 näher dargestellt, möglich.

Der Kurzhubzylinder 20 weist zwei Kammern 100 und 102 auf, die durch einen Kolben 104, der auf einer Kolbenstange 106 sitzt, die wiederum mit dem Lager 18 der Sensomatwalze 16 verbunden ist, getrennt werden. In den beiden Kammern herrschen Drücke $P_1$ und $P_2$, wobei immer $P_1 > P_2$ gilt. In die Zuleitungen 108 zur Kammer 100 und 110 zur Kammer 102 sind Drosseln 112 bzw. 114 eingebracht. Tritt nun eine Unrundheit bzw. Unebenheit 30 der Wickelrolle 26 auf, so erhält die Sensomatwalze einen Stoß, beispielsweise nach links. Aufgrund des reduzierten Querschnittes kann die Hydraulikflüssigkeit bzw. das Gas in der Kammer 100 nicht schnell genug entweichen, so daß es zu einem Druckanstieg kommt, der eine im wesentlichen zur Verschiebung lineare Gegenkraft aufbaut, so daß der Stoß der Sensomatwalze durch diese Anordnung mit einer Gegenkraft beaufschlagt und dadurch kompensiert wird. Eine Anregung des Systems ist auf diese Art und Weise nicht mehr möglich. Gleichwohl wird im Mittel zwischen Sensomat 16 und dem Wickel 30 immer die gleiche mittlere konstante Linienkraft in den Spalt 116 eingeleitet. In Fig. 9, wie in allen anderen Figuren, ist auch sehr gut die Führung der Papierbahn 120 um die Sensomatwalze 16 herum auf den Wickel 26 dargestellt.

Die Ausführungsform gemäß Fig. 11 zeigt eine alternative Ausführungsform der erfindungsgemäßen Schwingungsunterdrückungsvorrichtung nach Fig. 9 und 10. Im Gegensatz zur Ausführungsform nach Fig. 9 und 10 ist hier zur Kompensation ein zusätzlicher Zylinder 130 eingebracht, der beispielsweise an einer Wand 132 in einem Lager 134 abgestützt sein kann. Die Papierbahn 120 wird durch die Wand 132 durch die Öffnung 136 hindurchgeführt. Der etwas höhere konstruktive Aufwand gemäß Fig. 11 erlaubt es aber, gegenüber der Ausführungsform in Fig. 9 und 10 zwei getrennte Regelungen für den Kurzhubzylinder 20 und den Schwingungsunterdrückzylinder 130 vorzusehen. Während die Regelungen des Kurzhubzylinders 20 im Mittel dafür sorgt, daß die Linienkraft im Spalt 116 zwischen Wickelrolle 26 und Sensomatwalze 16 erhalten bleibt, werden evtl. auftretende Unebenheiten in der Wickeloberfläche durch entsprechende Gegenkräfte mit Hilfe des Schwingungsunterdrückzylinders 130 gegen diese Unebenheiten aufgebracht.

Auf diese Art und Weise wird nicht nur ein Schwingen der Andrücktrommel- bzw. Druckwalzenvorrichtung, der auch den Horizontalschlitten umfaßt, kompensiert, sondern darüber hinaus bei entsprechendem Aufbringen einer Gegenkraft auch noch die Wickelrolle geglättet, so daß die Unebenheit im Gegensatz zu den bisherigen Vorrichtungen nicht zunehmen, sondern im Mittel ausgeglichen werden und sich so die erwünschte runde Kontur des Wickels ergibt.

Die Ansteuerung des Schwingungsunterdrückzylinders erfolgt in Abhängigkeit von der Kontur des Wickels. Hierzu ist es notwendig, die Kontur des Wickels im zeitlichen Verlauf zu messen. Dies kann beispielsweise mit Hilfe eines optischen oder auch mechanischen Sensors geschehen, der Abweichungen von der idealen runden Kontur mißt oder aber auch durch einen über mehrere Zyklen gemittelten Kraftverlauf auf den Kolben 130, die in einer nicht dargestellten Speichereinheit abgelegt werden, womit eine selbstadaptive Anpassung der Kompensationskräfte an die Wickelkontur möglich ist.

Mit der Schwingungsunterdrückvorrichtung gemäß der Erfindung ist es somit erstmals möglich, bei einer Wickelvorrichtung, bei der der Wickel selbst im wesentlichen ortsfest ist und die Anpreßtrommel- bzw. Druckwalzenvorrichtung relativ zum Wickel mit dessen Anwachsen verschoben wird, unerwünschte Schwingungen der Anpreßtrommel- bzw. Druckwalzenvorrichtung zu unterdrücken, wobei im Mittel für eine konstante Anpreßkraft im Spalt zwischen Sensomatrolle und Wickel mittels einer Andrückvorrichtung, die als Kurzhubzylinder ausgelegt sein kann, Sorge getragen wird.

**Patentansprüche**

1. Schwingungsunterdrückresonator zur Unterdrückung von Schwingungen einer großen schwingenden Masse, mit

    1.1 einer Stützeinrichtung (50), die mit der großen schwingenden Masse verbunden ist;
    1.2 einer vorbestimmten Schwingungsunterdrückmasse ($M_R$ 54), die beweglich auf der Stützeinrichtung (50) angeordnet ist; dadurch gekennzeichnet, daß der Resonator des weiteren umfaßt:

1.3 mit Gas oder Flüssigkeit befüllbare Zylinder (60, 62), die fest mit der Stützeinrichtung (50) verbunden sind; wobei
1.4 die Kolben der Zylinder mit der auf der Stützeinrichtung beweglichen Masse über Kolbenstangen (56, 58) verbunden sind, so daß bei Auslenkung der Masse ($M_R$ 54) aus einer Gleichgewichtslage eine im wesentlichen harmonische Schwingung mit einer Frequenz erfolgt, die durch den im Zylinder herrschenden Druck ($P_Z$) bestimmt wird.

2. Schwingungsunterdrückresonator nach Anspruch 1, dadurch gekennzeichnet, daß die Zylinder (60, 62) mit einem Gas befüllt sind, und daß die Drücke im Zylinder bei Raumtemperatur derart gewählt werden, daß sich das Gas als ideales Gas verhält.

3. Vorrichtung zum Aufwickeln laufender Warenbahnen, insbesondere von Papierbahnen (120) zu einer Rolle (26) mit

3.1 einem Tambour, auf den die Bahn (120) aufgewickelt wird;
3.2 mit einer Anpreßtrommel- bzw. einer Druckwalzenvorrichtung(12, 16, 18), die relativ zum Tambour bewegbar ist; und
3.3 mit einer Anpreßeinrichtung (20), mit der die Anpreßtrommel (16) bzw. Druckwalze der Anpreßtrommel- bzw. Druckwalzenvorrichtung mit dem Tambour in Kontakt gebracht werden kann, um eine Linienkraft auf den Tambour aufzubringen; dadurch gekennzeichnet, daß
3.4 die Wickelvorrichtung eine Schwingungsunterdrückvorrichtung (70) für die Anpreßtrommel- bzw. Druckwalzenvorrichtung umfaßt, mit der Schwingungen, insbesondere Resonanzschwingungen der Anpreßtrommel- bzw. Druckwalzenvorrichtung (12, 16, 18) während des Wickelvorganges unterdrückt werden.

4. Wickelvorrichtung nach Anspruch 3, dadurch gekennzeichnet, daß die Schwingungsunterdrückvorrichtung (70) eine Stützeinrichtung (50) umfaßt, die mit der Anpreßtrommel- bzw. Druckwalzenvorrichtung fest verbunden ist.

5. Wickelvorrichtung nach Anspruch 4, dadurch gekennzeichnet, daß die Schwingungsunterdrückvorrichtung (70) eine vorbestimmte Masse (54) umfaßt, die gegenüber der Anpreßtrommel- bzw. Druckwalzenvorrichtung auf bzw. an der Stützeinrichtung (50) beweglich angeordnet ist.

6. Wickelvorrichtung nach Anspruch 5, dadurch gekennzeichnet, daß die Schwingungsunterdrückvorrichtung (70) Mittel zur Anregung einer Schwingung der Anpreßtrommel- bzw. Druckwalzenvorrichtung phasenversetzten Schwingung umfaßt.

7. Wickelvorrichtung nach Anspruch 6, dadurch gekennzeichnet, daß die Mittel zur Anregung der phasenversetzten Schwingung der vorbestimmten Masse mindestens einen Aktuator (60, 62) zum Anregen der Schwingung umfaßt.

8. Wickelvorrichtung nach einem der Ansprüche 6 oder 7, dadurch gekennzeichnet, daß die Mittel zur Anregung der phasenversetzten Schwingung mindestens einen Bewegungssensor (80), der an der Anpreßtrommel- bzw. Druckwalzenvorrichtung angeordnet ist, umfaßt.

9. Wickelvorrichtung nach Anspruch 8, dadurch gekennzeichnet, daß die an der Anpreßtrommel- bzw. Druckwalzenvorrichtung angebrachte(n) Bewegungssensor(en) (80) ein Signal aufnehmen, aus dem die aktuelle Frequenz der Schwingung der Anpreßwalzen- bzw. Druckwalzenvorrichtung ermittelt werden kann.

10. Wickelvorrichtung nach einem der Ansprüche 6 bis 9, dadurch gekennzeichnet, daß die Mittel zur Anregung der phasenversetzten Schwingung der Masse Mittel zum Einstellen der Schwingungsfrequenz der Masse umfassen.

11. Wickelvorrichtung nach einem der Ansprüche 6 bis 10, dadurch gekennzeichnet, daß die Mittel zur Anregung der phasenversetzten Schwingung mit Gas oder Flüssigkeit gefüllte Zylinder umfassen, deren Steifigkeit $K_A$ in Abhängigkeit vom im Zylinder (60, 62) herrschenden Druck ($P_Z$) eingestellt werden kann.

12. Wickelvorrichtung nach einem der Ansprüche 6 bis 11, dadurch gekennzeichnet, daß die Mittel zur Anregung der phasenversetzten Schwingung der vorbestimmten Masse eine Steuer-/Regeleinrichtung (82) umfaßt, mit der in Abhängigkeit vom vom Bewegungssensor (80) aufgenommenen Meßsignal die Mittel zum Einstellen der Schwingungsfrequenz derart angesteuert werden, daß die Schwingungsfrequenzen, mit der die Masse der Schwingungsunterdrückvorrichtung schwingt, den Frequenzen der Schwingung der Anpreßtrommel- bzw. Druckwalzenvorrichtung entspricht.

13. Wickelvorrichtung nach einem der Ansprüche 6 bis 11, dadurch gekennzeichnet, daß die Mittel zur Anregung der phasenversetzten Schwingung der vorbestimmten Masse eine Steuer-/Regeleinrichtung umfaßt, mit der in Abhängigkeit vom vom Bewegungssensor aufgenommenen Meßsignal die Mittel zum Einstellen der Schwingungsfrequenz derart angesteuert werden, daß das Schwingungsfrequenzband, das der Schwingung der Masse der Schwingungsunterdrückvorrichtung zugrundeliegt, im wesentlichen dem Schwingungsfrequenzband der Schwingungen der Anpreßtrommel- bzw. Druckwalzenvorrichtung entspricht.

14. Wickelvorrichtung nach Anspruch 12 oder 13, dadurch gekennzeichnet, daß die Mittel zur Anregung der phasenversetzten Schwingung mindestens einen Bewegungssensor (90) zum Aufnehmen eines Bewegungssignales der vorbestimmten Masse ($M_R$ 54) umfaßt, so daß aus dem Signal des Bewegungssensors der Anpreßtrommel- bzw. Druckwalzenvorrichtung und dem Signal des Bewegungssensors der vorbestimmten Masse die Phasenlage der Schwingungen zueinander bestimmt und der Steuereinrichtung zugeführt werden kann, so daß die durch den Aktuator angeregte Schwingung der Schwingungsunterdrückvorrichtung zur Schwingung der Anpreßtrommel- bzw. Druckwalzenvorrichtung derart phasenversetzt ist, daß eine weitgehend vollständige Auslöschung der Schwingung der Anpreßtrommel- bzw. Druckwalzenvorrichtung erzielt wird.

15. Wickelvorrichtung nach Anspruch 3, dadurch gekennzeichnet, daß die Schwingungsunterdrückvorrichtung eine Stützeinrichtung umfaßt, die mit der Anpreßtrommel- bzw. Druckwalzenvorrichtung fest verbunden ist, und daß die Schwingungsunterdrückvorrichtung des weiteren eine feste Abstützung aufweist.

16. Wickelvorrichtung nach Anspruch 15, dadurch gekennzeichnet, daß die Schwingungsunterdrückvorrichtung einen mit Gas oder Flüssigkeit befüllbaren Zylinder umfaßt, wobei die an den Zylinder angeschlossenen Leitungen mindestens eine Drossel (112, 114) aufweisen.

17. Wickelvorrichtung nach Anspruch 15, dadurch gekennzeichnet, daß die Schwingungsunterdrückvorrichtung mindestens einen Aktuator (130) umfaßt.

18. Wickelvorrichtung nach Anspruch 17, dadurch gekennzeichnet, daß die Schwingungsunterdrückvorrichtung einen Kontursensor umfaßt, mit dem die Außenkontur des Wickels aufgenommen wird.

19. Wickelvorrichtung nach Anspruch 18, dadurch gekennzeichnet, daß die Schwingungsunterdrückvorrichtung eine Steuer-/Regelvorrichtung umfaßt, die mindestens einen Aktuator (130) derart ansteuert, daß sich durch die unebene Kontur des Wickels ergebende Schwingungsanregungen unterdrückt werden.

20. Verfahren zum Aufwickeln für laufende Warenbahnen, insbesondere Papierbahnen zu einer Rolle, bei dem

20.1 während des gesamten Wickelvorganges die Anpreßrolle gegen die Wickelfläche der entstehenden Warenbahnrolle gedrückt wird;

20.2 die Warenbahnrolle mit ihrem Zentrum im wesentlichen während des Wickelvorganges ortsfest bleibt; und

20.3 die Anpreßtrommel- bzw. Druckwalzenvorrichtung in dem Maße, in dem die Warenbahnrolle anwächst, verfahren oder ausgelenkt wird, ohne daß sie außer Kontakt mit der Warenbahnrolle kommt;

dadurch gekennzeichnet, daß

20.4 Schwingungen, insbesondere Resonanzschwingungen der Anpreßtrommel- bzw. Druckwalzenvorrichtung gegen die Warenbahnrolle unterdrückt werden.

21. Verfahren nach Anspruch 20, dadurch gekennzeichnet, daß die Bewegung der Anpreßtrommel- bzw. Druckwalzenvorrichtung von einem Bewegungssensor aufgenommen wird und hieraus die Schwingungsfrequenzen bzw. das Schwingungsfrequenzband der Bewegung bestimmt wird.

22. Verfahren nach Anspruch 21, dadurch gekennzeichnet, daß in Abhängigkeit vom Frequenzsignal der Bewegung der Anpreßtrommel- bzw. Druckwalzenvorrichtung die Steifigkeit der Schwingungsunterdrückvorrichtung derart eingestellt wird, daß die Schwingungsfrequenzen der Schwingungsunterdrückeinrichtung, die eine vorbestimmte Masse umfaßt, der Schwingungsfrequenzen der Anpreßtrommel- bzw. Druckwalzenvorrichtung entspricht.

23. Verfahren nach Anspruch 22, dadurch gekennzeichnet, daß in Abhängigkeit vom Frequenzsignal der Bewegung der Anpreßtrommel- bzw. Druckwalzenvorrichtung die Steifigkeit und Dämpfung der Schwingungsunterdrückvorrichtung derart eingestellt wird, daß das Schwingungsfrequenzband, mit der die Masse der Schwingungsunterdrückvorrichtung schwingt, dem Schwingungsfrequenzband, mit dem die Anpreßtrommel- bzw. Druckwalzenvorrichtung schwingt, entspricht.

24. Verfahren nach einem der Ansprüche 21 bis 23, dadurch gekennzeichnet, daß die Bewegung der Schwingungsunterdrückvorrichtung mittels eines weiteren Bewegungssensors aufgenommen wird und hieraus die Phasenlage der Bewegung der Schwingungsunterdrückvorrichtung zur Bewegung der Anpreßtrommel- bzw. Druckwalzenvorrichtung bestimmt wird.

25. Verfahren nach einem der Ansprüche 21 bis 24, dadurch gekennzeichnet, daß der Aktuator zum Erregen der Schwingung der Schwingungsunterdrückungsvorrichtung derart phasenversetzt erregt wird, daß die Schwingung der Anpreßtrommel bzw. Druckwalzenvorrichtung weitgehend unterdrückt wird.

26. Verfahren nach Anspruch 20, dadurch gekennzeichnet, daß die Kontur der Wickelrolle mittels eines Kontursensors aufgenommen wird.

27. Verfahren nach Anspruch 26, dadurch gekennzeichnet, daß der Aktuator der Schwingungsunterdrückvorrichtung aufgrund des Kontursignales des Kontursensors derart betätigt wird, daß durch Unebenheiten der Wickelrolle verursachte Schwingungen der Anpreßtrommel- bzw. Druckwalzenvorrichtung weitgehend unterdrückt werden.

FIG.1

FIG.2

FIG.3

FIG.4

FIG.5

FIG.6.

FIG. 4

FIG.8

FIG.9

FIG. 10

FIG.11